Europäisches Patentamt

European Patent Office

Office européen des brevets

(19)

(11) Numéro de publication: **0 039 255**
**B1**

(12) # FASCICULE DE BREVET EUROPEEN

(45) Date de publication du fascicule du brevet:
18.04.84

(21) Numéro de dépôt: **81400244.0**

(22) Date de dépôt: **17.02.81**

(51) Int. Cl.³: **B 60 C 23/04,** G 01 L 9/10, G 01 L 17/00

(54) **Capteur de pression pour organe rotatif.**

(30) Priorité: **27.02.80 FR 8004381**

(43) Date de publication de la demande:
**04.11.81 Bulletin 81/44**

(45) Mention de la délivrance du brevet:
**18.04.84 Bulletin 84/16**

(84) Etats contractants désignés:
**DE GB NL SE**

(56) Documents cités:
**GB - A - 330 898**
**US - A - 3 374 460**

(73) Titulaire: **INTERTECHNIQUE (Société anonyme),**
**F-78370 Plaisir (FR)**

(72) Inventeur: **Boutteville, Raymond, 57, avenue**
**Paul-Vaillant-Conturier, F-78390 Bois D'arcy (FR)**
Inventeur: **Febvret, Thierry, 86, avenue de Paris,**
**F-78000 Versailles (FR)**

(74) Mandataire: **Fort, Jacques et al, CABINET**
**PLASSERAUD 84, rue d'Amsterdam, F-75009 Paris (FR)**

Capteur de pression pour organe rotatif

La présente invention a pour objet un capteur de pression pour organe rotatif, permettant de fournir une tension électrique fonction de la pression qui règne dans l'organe.

L'invention trouve une application particulièrement importante, bien que non exclusive, dans la mesure de la pression régnant dans les pneumatiques de roues d'avions. On sait en effet que la présence d'un pneu éclaté ou dégonflé est source d'accident au décollage ou à l'atterrissage. Si l'inspection visuelle permet de déceler un pneu éclaté avant que l'avion ne quitte son poste de stationnement, la présence d'un ou de plusieurs pneumatiques dégonflés ou sous-gonflés peut au contraire passer inaperçue du personnel au sol. Il est en conséquence souhaitable de fournir une indication sur la pression qui règne dans les pneumatiques.

Une solution possible au problème consiste à placer un capteur sur la partie tournante de la roue et à transmettre le signal électrique qu'il fournit par l'intermédiaire d'un collecteur électrique. Cette solution, qui implique un contact glissant, présente des inconvénients qui sont particulièrement graves lors du montage dans une roue d'avion, étant donné les écarts de température subis et la présence de polluant qui exige l'emploi d'un collecteur étanche.

L'invention vise à fournir un capteur de faible encombrement, dont la présence n'exclut pas celle d'autres dispositifs devant également être entraînés par l'organe rotatif, et facilement réalisable de façon étanche.

Dans ce but, l'invention propose notamment un capteur de pression comprenant un boîtier fixe dans lequel un arbre central de couplage avec ledit organe est monté fixe en translation et libre en rotation, caractérisé notamment en ce qu'il comporte un équipage mobile coulissant sur l'arbre, relié à l'arbre par des parois déformables qui délimitent, avec des surfaces de l'équipage, une chambre de pression reliée à l'intérieur dudit organe par un passage ménagé dans l'arbre, lesdites surfaces de l'équipage étant telles que la pression exerce sur l'équipage une force résultante axiale qui s'oppose à celle d'un ressort de rappel placé entre l'arbre et l'équipage, et en ce que ledit équipage comprend une masse ferromagnétique assurant un couplage variable entre les bobines excitatrices et réceptrices d'un transformateur différentiel porté par le boîtier. La masse ferromagnétique présente une forme telle que son déplacement axial fait varier la réluctance du transformateur différentiel et induit un signal sur la bobine réceptrice, avantageusement placée entre deux bobines excitatrices dans le sens axial.

Dans un mode avantageux de réalisation, l'arbre est muni de collerettes radiales de diamètre différent, reliées, par des soufflets constituant les parois déformables, à des faces opposées d'un disque solidaire de l'équipage mobile, de façon à délimiter des surfaces différentes d'action de la pression sur les deux faces du disque.

En cas de montage du capteur sur une roue d'avion, le boîtier sera fixé sur la fusée fixe, tandis que l'arbre assurera le couplage entre la partie rotative de la roue et la génératrice tachymétrique qui est généralement nécessaire, notamment pour commander le système d'antipatinage.

L'invention sera mieux comprise à la lecture de la description qui suit d'un mode particulier de réalisation, donné à titre d'exemple non limitatif.

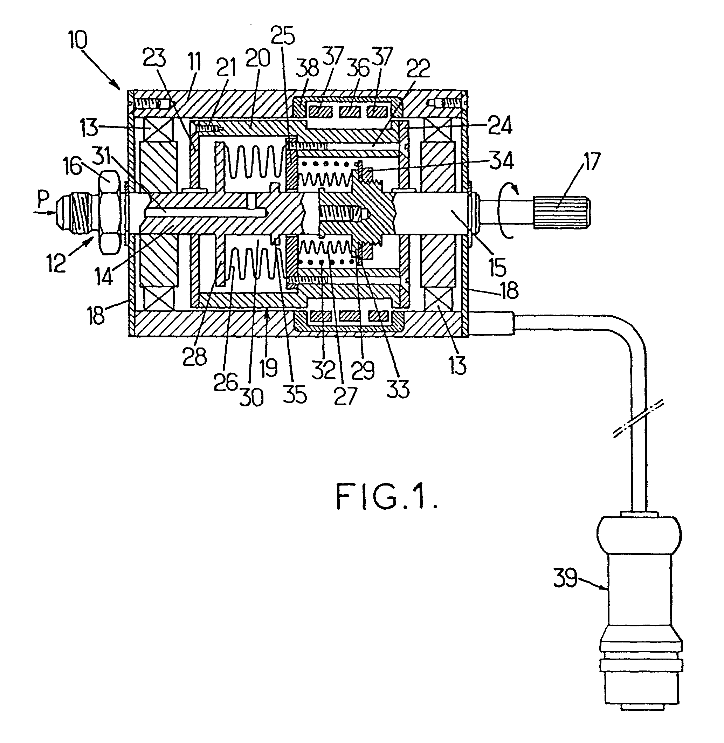

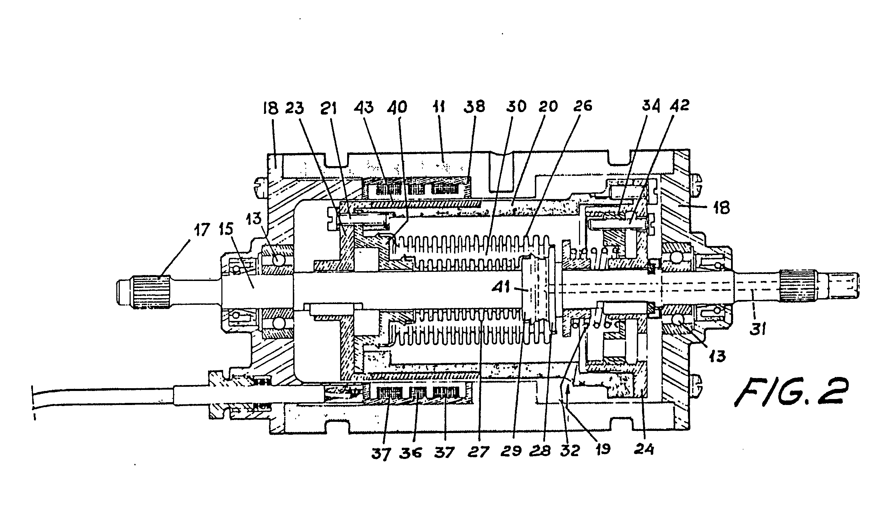

La description se réfère aux fig. 1 et 2 qui l'accompagnent et qui montrent, à titre d'exemples, deux modes de réalisation du capteur, en coupe suivant un plan passant par son axe.

Dans les deux modes de réalisation, le capteur 10 comporte un boîtier 11 en matériau non magnétique, par exemple en alliage léger, muni de moyens (non représentés) permettant de le fixer sur une fusée. Ce boîtier 11 porte des roulements étanches 13 supportant un arbre rotatif 12 et le retenant en translation.

Dans le cas de la fig. 1, l'arbre est constitué en deux tronçons 14 et 15 fixés l'un à l'autre par une liaison filetée. L'un des tronçons est muni d'un pas de vis et d'un écrou 16 de couplage avec la partie rotative d'une roue. L'autre tronçon 15 est muni d'un prolongement cannelé 17 de liaison avec un autre organe, tel qu'une génératrice tachymétrique. Les deux tronçons font saillie à travers des cloisons terminales d'étanchéité 18 du boîtier 11. Ainsi, l'arbre constitue un organe de transmission de mouvement en même temps qu'un organe d'entrée du capteur 10.

Sur l'arbre 12 est monté coulissant un équipage 19 comprenant une masse de matériau ferromagnétique 20, constitué dans le mode de réalisation représenté par un anneau de fer doux. Des vis 21 et 22 fixent cet anneau à des joues 23 et 24 clavetées coulissantes sur l'arbre 12. Les vis 22 retiennent également, contre un épaulement interne de l'anneau 20, un disque 25 percé d'un trou central de diamètre suffisant pour qu'un jeu subsiste entre le disque 25 et le tronçon 14 de l'arbre 12.

Les cloisons déformables, constituées par des soufflets 26 et 27, relient de façon étanche le disque 25 à des collerettes 28 et 29 respectivement ménagées sur les tronçons 14 et 15. Ces soufflets 26 et 27 délimitent, avec les collerettes 28 et 29 et le disque 25, une chambre de pression 30 dans laquelle débouche un passage d'amenée de pression 31 percé dans le tronçon 14.

Les soufflets 26 et 27 ont des dimensions radiales différentes, de sorte que la pression qui règne dans la chambre 30 exerce sur le disque 25 une force résultante, dirigée de la gauche vers la droite sur la figure. Des moyens élastiques de rappel tarés sont prévus pour équilibrer cette force. Dans le mode de réalisation représenté, ils sont constitués par un ressort de rappel 32 comprimé entre le disque 25 et une rondelle 33 dont la position est ajustable à l'aide d'un écrou de tarage 34. Une butée 35 permet de limiter le déplacement de l'équipage mobile 19 lorsqu'aucune pression ne règne dans la chambre 30.

Les moyens du capteur 10 destinés à fournir un signal électrique en réponse aux déplacements axiaux de l'équipage 19 sont constitués par un transformateur différentiel à réluctance variable. Ce transformateur comprend une bobine réceptrice 36 portée par le boîtier 11 entre deux bobines excitatrices 37. Le circuit magnétique de ce transformateur différentiel comporte une bague 38 placée dans le boîtier 11 et ménageant un chambrage de réception des bobines 36 et 37, ainsi que la masse ferromagnétique 20 de l'équipage mobile 19. Dans cette masse est ménagée une gorge de dimension axiale correspondant à celle du chambrage.

On voit que le capteur est facile à réaliser et également à monter, étant donné le fractionnement de l'arbre en deux tronçons. Il est aisément réglable en usine par action sur l'écrou de tarage 34. L'entrefer du circuit magnétique du transformateur peut être réduit à une valeur très faible, ce qui donne au capteur une sensibilité élevée et permet d'atteindre une précision satisfaisante, même en donnant à l'équipage mobile 19 une amplitude de débattement axial faible, de quelques millimètres.

Le fonctionnement du capteur qui vient d'être décrit ressort immédiatement de la description qui précède. Tout déplacement de la masse 20 par rapport à la position centrée dans laquelle elle est présentée sur la figure crée une variation de réluctance qui induit un signal, fonction du déplacement, dans la bobine réceptrice 36, lorsque les bobines excitatrices 37 sont alimentées. L'alimentation de ces bobines et le prélèvement du signal peuvent se faire par un câble électrique muni d'un connecteur aéronautique classique approprié 39.

Dans la variante de réalisation montrée en fig. 2, dont les organes correspondant à ceux déjà représentés en fig. 1 sont désignés par les mêmes numéros de référence et ne seront pas décrits de nouveau, l'arbre rotatif 12 est d'une seule pièce. Pour en permettre le montage, le soufflet 26 est placé autour du soufflet 27. Les deux soufflets relient chacun un disque embout 40, solidarisé de la joue 23 par les vis 21, et un renflement 41 de l'arbre, formant les collerettes 28 et 29 entre lesquelles le passage 31 débouche dans la chambre 30.

Le capteur est muni de moyens permettant d'ajuster la pression pour laquelle le signal de sortie électrique est nul. Ces moyens comprennent un écrou de réglage 34 dont la position est ajustable dans la joue 24 et qui constitue l'appui du ressort de rappel 32. Une vis 42 permet de bloquer l'écrou 34 une fois le réglage effectué.

La variation de réluctance est obtenue en munissant l'équipage mobile d'un anneau 43 de matériau à forte perméabilité, tel que l'alliage dénommé Armco.

## Revendications

1. Capteur de pression pour organe rotatif, comprenant un boîtier fixe dans lequel un arbre central (12) de couplage avec ledit organe est monté fixe en translation et libre en rotation, caractérisé en ce que le capteur comprend un équipage coulissant sur ledit arbre, relié à l'arbre par des parois déformables coaxiales (26, 27) qui délimitent avec des surfaces de l'équipage une chambre de pression (30) reliée à l'intérieur dudit organe par un passage (31) ménagé dans l'arbre, lesdites surfaces de l'équipage étant proportionnées de façon que la pression exerce sur l'équipage une force résultante axiale qui s'oppose à celle d'un ressort de rappel (32) placé entre l'arbre et l'équipage, et en ce que ledit équipage comporte une masse ferromagnétique assurant un couplage qui varie en fonction des déplacements de l'équipage entre les bobines excitatrices (37) et réceptrices (36) d'un transformateur différentiel porté par le boîtier.

2. Capteur suivant la revendication 1, caractérisé en ce que l'arbre est muni de collerettes radiales de diamètre différent, reliées, par des soufflets constituant les parois déformables (26, 27), à un disque solidaire de l'équipage mobile, de façon à délimiter des surfaces différentes d'action de la pression sur les deux faces du disque.

3. Capteur suivant l'une des revendications 1 ou 2, caractérisé en ce que la masse ferromagnétique est constituée par un anneau (20, 43) déplaçable coaxialement à une bague ferromagnétique (38) portée par le boîtier et encadrant les bobines, avec un jeu radial faible de façon à réduire l'entrefer du circuit magnétique.

4. Capteur suivant l'une des revendications précédentes, caractérisé en ce que le ressort de rappel (32) prend appui à une extrémité sur ledit équipage et, à l'autre, sur l'arbre, un écrou de tarage (34) étant prévu.

5. Application du capteur suivant l'une des revendications précédentes à la mesure de la pression qui règne dans un pneumatique de roue d'avion, caractérisée en ce que le boîtier est porté par la fusée de roue et en ce que l'une des extrémités de l'arbre, en saillie hors du boîtier, est couplée à la partie rotative de la roue.

## Claims

1. Pressure detector for a rotatable unit, comprising a stationary housing and an axial shaft (12) coupled to said unit, fixed against axial movement in the housing and free to rotate, characterized in that the detector comprises an assembly slidable on said shaft, connected to the shaft by coaxial deformable walls (26, 27) which define, with surfaces of the assembly, a pressure chamber (30) communicating with the inside of said unit *via* a passage (31) formed in the shaft, said surfaces of the assembly being proportioned for the pressure to exert, on the assembly, an axial resulting force opposing the force of a return spring (32) located between the shaft and the assembly, and in that said assembly has a ferromagnetic body providing a coupling which varies responsive to the extents of movement of the assembly between the excitating (37) and receiving (36) coils of a differential transformer carried by the housing.

2. Detector according to claim 1, characterized in that the shaft is provided with two radially directed flanges of different diameters which are connected, by bellows constituting the deformable walls (26, 27), to a disk fast with the movable assembly for defining different pressure action areas on the two end surfaces of the disk.

3. Detector according to one of claims 1 or 2, characterized in that the ferromagnetic body consists of a ring (20, 43) located for movement coaxially to a ferromagnetic collar carried by the housing and strudling the coils, with a radial clearance which is low for reducing the air gap of the magnetic circuit.

4. Detector according to one of the preceding claims, characterized in that the return spring (32) has an end in abutting relation with said assembly and an other end in abutting relation with the shaft, an adjusting nut (34) being provided.

5. Application of the detector according to one of the preceding claims to the measurement of the pressure which prevails in the tire of an aircraft wheel, characterized in that the housing is carried by the wheel axis and in that one of the end portions of the shaft projects out of the housing and is connected to the rotatable part of the wheel.

## Patentansprüche

1. Druckmessumformer für ein drehendes Organ mit einem feststehenden Gehäuse, in dem eine mittlere Welle (12) zum Ankuppeln des erwähnten Organs gegen eine Verschiebung gesichert und drehbar gelagert ist, dadurch gekennzeichnet, dass der Messumformer ein auf der erwähnten Welle verschiebbar gelagertes Bauteil aufweist, das mit der Welle durch verformbare koaxiale Wände (26, 27) verbunden ist, die zusammen mit Oberflächen des Bauteils eine Druckkammer (30) begrenzen, die mit dem Inneren des erwähnten Organs durch einen in der Welle ausgebildeten Kanal (31) verbunden ist, wobei die erwähnten Oberflächen des Bauteils so bemessen sind, dass der Druck auf das Bauteil eine resultierende Axialkraft ausübt, die der einer zwischen der Welle und dem Bauteil angeordneten Rückstellfeder (32) entgegenwirkt, und dass das erwähnte Bauteil eine ferromagnetische Masse aufweist, die eine sich in Abhängigkeit von den Verschiebungen des Bauteils ändernde Kopplung zwischen den Erreger- und Empfängerwicklungen (37, 36) eines in dem Gehäuse gelagerten Differentialtransformators ermöglicht.

2. Messumformer nach Anspruch 1, dadurch gekennzeichnet, dass die Welle radiale Bunde mit verschiedenem Durchmesser aufweist, die durch die verformbaren Wände (26, 27) bildende Wellrohre mit einer an dem verschiebbaren Bauteil befestigten Kreisscheibe so verbunden sind, dass sie verschiedene, dem Druck ausgesetzte Oberflächen auf den beiden Seiten der Kreisscheibe begrenzen.

3. Messumformer nach Anspruch 1 oder 2, dadurch gekennzeichnet, dass die ferromagnetische Masse durch einen Ring (20, 43) gebildet ist, der koaxial zu einem durch das Gehäuse getragenen und die Wicklungen umgebenden ferromagnetischen Reif (38) mit einem geringen radialen Spiel koaxial verschiebbar ist, so dass der Luftspalt des magnetischen Kreises verringert wird.

4. Messumformer nach einem der vorhergehenden Ansprüche, dadurch gekennzeichnet, dass sich die Rückstellfeder (32) mit ihrem einen Ende an dem erwähnten Bauteil und mit ihrem anderen Ende an der Welle abstützt, wobei eine Abgleichmutter (34) vorgesehen ist.

5. Anwendung des Messumformers nach einem der vorhergehenden Ansprüche zum Messen des Drucks, der in einem pneumatischen Flugzeugrad herrscht, dadurch gekennzeichnet, dass das Gehäuse durch den Achsschenkel des Rades getragen wird und dass das eine der Wellenenden aus dem Gehäuse herausragend mit dem drehenden Teil des Rades gekuppelt ist.

FIG.1.

FIG. 2

0 039 255